Europäisches Patentamt

European Patent Office

Office européen des brevets

(11) Veröffentlichungsnummer: **0 134 835**
**A1**

(12) # EUROPÄISCHE PATENTANMELDUNG

(21) Anmeldenummer: **83109360.4**

(22) Anmeldetag: **20.09.83**

(51) Int. Cl.⁴: **C 11 B 1/10**
C 11 B 3/14, A 23 P 1/00

(43) Veröffentlichungstag der Anmeldung:
**27.03.85** Patentblatt **85/13**

(84) Benannte Vertragsstaaten:
**BE DE FR GB IT NL**

(71) Anmelder: **Schumacher, Heinz**
**Höperfeld 26**
**D-2050 Hamburg 80(DE)**

(72) Erfinder: **Schumacher, Heinz**
**Höperfeld 26**
**D-2050 Hamburg 80(DE)**

(74) Vertreter: **Glaeser, Joachim, Dipl.-Ing. et al,**
**Dr. M. Kohler, Dipl.-Ing. J. Glaeser Königstrasse 28**
**D-2000 Hamburg 50(DE)**

(54) **Verfahren zum Abtrennen unerwünschter Bestandteile wie Geschmacks- und Geruchsstoffe, freie Fettsäuren usw. aus insbesondere pflanzlichen und tierischen Ölen und Fetten.**

(57) Die Abtrennung von freien Fettsäuren und anderer unerwünschter Begleitstoffe wie Geruchs- und Geschmacks- stoffe usw. aus insbesondere pflanzlichen und tierischen Ölen und Fetten erfolgt durch Trägermitteldestillation im Vakuum. Das zu reinigende Öl oder Fett wird bei höheren Drucken und Temperaturen in flüssiger Phase mit dem gleiche Bedingungen aufweisenden Trägermittel, insbes. Wasser, kontaktiert und das Gemisch spontan auf einen Trenndruck entspannt, der bei etwa 1 bis 30 mbar liegt. Nach dem Abtrennen der flüssigen Öl- bzw. Fettphase von der dampfförmigen Trägermittelphase wird das Öl bsw. Fett erneut mit flüssigem Träger in flüssiger Phase kontaktiert und das Gemisch spontan entspannt. Das Verfahren arbeitet mindestens zweistufig. Die Abtrennung der freien Fettsäuren und der Geruchs- und Geschmacksstoffe erreicht nach der zweiten Stufe einen Wert, der nur noch wenig unter 100 % liegt.

EP 0 134 835 A1

Verfahren zum Abtrennen unerwünschter Bestandteile wie Ge-
schmacks- und Geruchsstoffe, freie Fettsäuren usw. aus insbesondere pflanzlichen und tierischen Ölen und Fetten.

Praktisch alle Öle und Fette, insbesondere pflanzlicher und
tierischer Herkunft, enthalten im rohen Zustand neben unterschiedlichen Anteilen an Farbstoffen wie Carotinoiden usw.
auch bestimmte Anteile an freien Fettsäuren, Geschmacks- und
Geruchsstoffen u.a., die besonders bei für den Nahrungsmittelsektor vorgesehenen Ölen und Fetten deren Direktverbrauch unmöglich machen.

Während die das rohe Öl oder Fett begleitenden Farbstoffe wie
Chlorophyll, Carotinoide usw. im Anschluß an die Neutralisation durch Adsorption an Aktivkohle, Zeolithen oder Bleicherde
verbunden mit nachfolgender Filtration und Klärung, oder durch
chemische Behandlung mit Sauerstoff, Ozon, Wasserstoffperoxid
usw. leicht entfernt werden können, bereiten insbesondere bei
pflanzlichen und tierischen Ölen und Fetten, die stets noch
vorhandenen freien Fettsäuren sowie Geschmacks- und Geruchsstoffe, letztere mit ihrem charakteristischen Eigengeruch, bei
angestrebter, optimaler Abtrennung bzw. Unschädlichmachung
trotz größter technologischer Anstrengungen immer noch erhebliche Schwierigkeiten.

Obwohl immer wieder versucht wurde, über chemische Reaktionen
wie beispielsweise Verseifung, Veresterung, Spaltung u.a. die
Begleitstoffe der Öle und Fette unschädlich zu machen, werden
auch heute noch die am ehesten befriedigenden Ergebnisse allein
mit Hilfe der sogenannten Dämpfung bzw. Desodorierung erzielt.

Dies u.a. auch weil bei ihr -im Gegensatz zu chemischen Verfahren- Umweltprobleme nach Art der Abwasseraufbereitung bei
der (Fettsäure-)Seifenspaltung, nicht oder nur in einem vernachlässigbaren Umfang auftreten.

Die Dämpfung oder Desodorierung, die eine der letzten Phasen
im Verlauf der Reinigung von Fetten und Ölen darstellt, ist im
Prinzip eine Destillation mit Schleppmittel, im speziellen
Falle Wasserdampf, wobei die leicht flüchtigen Geschmacks- und Geruchsstoffe, die bekanntlich im reinen Zustand höhere Dampfdrucke als die Glyceride (Fette) aufweisen, sowie die freien,
nicht veresterten Fettsäuren, von den Glyceriden abgetrennt
werden.


Die insbesondere im Nahrungsmittelsektor unerwünschten Begleitstoffe (Geruchsstoffe, Geschmacksstoffe, freie Fettsäuren u.a.), neben den Fettsäuren vorwiegend Aldehyde und Ketone, die vielfach, wenn nicht ausschließlich, durch Autoxidation und/oder Hydrolyse während der Gewinnung der Öle und Fette,
oder aber auch beim längeren Lagern der rohen Öle und Fette gebildet werden oder aus Vorstufen während der Desodorierung insbesondere bei höheren Temperaturen entstehen (Veresterung, Kondensation usw.), liegen zwar nur in geringen Mengen von wenigen
ppM bis zu einigen ppB vor, doch ist ihr charakteristischer Geruch derart stark, daß sie aus dem Öl oder Fett unbedingt und
nach Möglichkeit optimal entfernt werden müßen.

Ähnlich verhält es sich mit den freien Fettsäuren, ob gesättigter oder ungesättigter Natur, deren Anteil in den rohen Ölen
und Fetten jedoch erheblich über demjenigen der Geschmacks- und
Geruchsstoffe liegt.


Der geringe Anteil der unerwünschten Begleitstoffe im rohen Öl
oder Fett, insbesondere wenn es sich um Geschmacks- und Geruchsstoffe handelt, schließt eine einfache fraktionierte Destillation, trotz ihrer erheblich überdenjenigen der Glyceride liegenden Dampfdrucke, aus, da durch die niedrigen Konzentrationen
die vorhandenen Partialdrucke im Öl oder Fett hierzu nicht geeignet sind.


Die Dämpfung bzw. Desodorierung, d.h., die Destillation mit einem Trägerdampf bzw. Schleppmittel, insbesondere Wasserdampf und
unter vermindertem Druck, ist daher derzeit das einzig brauchbare
technische Verfahren, um die rohen Öle und Fette, die bereits
vorausgegangenen Raffinationsprozessen unterworfen wurden, weitgehendst von den unerwünschten Begleitstoffen zu befreien.

0134835

Dabei werden neben den Geruchs- und Geschmackastoffen auch
die übrigen flüchtigen Komponenten wie freie Fettsäuren,
Alkohole, Sterine, Tocopherole u.a. ganz oder zum Teil, mit
abgetrennt.


Der Dampfverbrauch bei der Desodorierung von rohen, pflanzlichen und tierischen Ölen und Fetten durch Destillation mit
einem Trägermittel, insbes. Wasserdampf im Vakuum ist bei
technischen Anlagen um so höher, je niedriger der Dampfdruck
der auszutreibenden Komponenten, insbesondere der Geruchs-
und Geschmacksstoffe sowie der freien Fettsäuren ist.

Umgekehrt zeigen die freien Fettsäuren ein Siedeverhalten,
dessen Temperaturgradienten die Anheizung der Glyceride auf
dieselben zersetzende Destillationstemperaturen erforderlich
machen.


Darüberhinaus steigt der Dampfverbrauch mit steigendem Druck
(abnehmendem Vakuum) in der Dämpfungs- bzw. Desodorierungsanlage an. Man rechnet daher im praktischen Betrieb mit einer
vom Arbeitsdruck und der Arbeitstemperatur abhängigen Dampfverbrauch (Wasserdampf als Schleppmittel) von 5 bis 20 Gew.-
%, bezogen auf das eingesetzte rohe Öl oder Fett, bei Arbeitstemperaturen zwischen etwa 170 und 225°C und einem Druck von
etwa 5 bis 25 mbar. Das Wasserdampfvolumen liegt unter diesen
Bedingungen bei etwa 10 bis 22 $m^3$ je kg zu behandelndem Öl.


Die technische Dämpfung von rohen, raffinierten Ölen und
Fetten pflanzlicher und/oder tierischer Herkunft kann sowohl
diskontinuierlich als auch halb- oder vollkontinuierlich erfolgen, wobei die Auswahl des jeweiligen Verfahrens von der
Durchsatzmenge in der Zeiteinheit und dem Reinheitsgrad bzw.
der Qualität des behandelten Öls bestimmt wird.


Diskontinuierliche Desodoreure mit Blase und eingebauten Prallblechen, relativ großem Kopfraum (um das Mitreißen von Neutralöl zu vermeiden), in der Blase eingebautem Dampfverteilerstern,
Brüdenverdichter und Fettfänger sind immer noch weit verbreitet.

0134835

Die Kapazität liegt im allgemeinen bei 5 bis 25 Tonnen Öl.
Das Vakuumsystem (6 bis 15 mbar) besteht meist aus Dampfstrahlern mit nachgeschaltetem Einspritzkondensator und Brüdenverdichter.
Im Anschluß an die Dämpfung, bei der ca. 0,2 % der Gesamtmasse als Begleitstoffe unerwünschter Natur entfernt werden,
wird das Öl im Dämpfer auf wenig unter 100°C gekühlt und
dann in einem Vakuumkühler auf ca. 40 bis 60°C erkaltet, um
Oxidationsreaktionen durch Luftsauerstoff bei höheren Temperaturen weitgehendst zu unterbinden.

Ähnlich arbeiten halbkontinuierliche Anlagen oder solche vollkontinuierlicher Art, die jedoch ein erhebliches Maß an Kontrolle und Kontrollorgane erforderlich machen, insbesondere
wenn unterschiedliche Ölqualitäten verarbeitet werden müßen.

Die Verweilzeit muß gut dimensuoniert sein, um einmal -bei zu
langer Verweilzeit- einer Dimerisierung des Öls vorzubeugen
und zum andern die eben noch erforderliche Verweilzeit zu erreichen.

Schwierigkeiten bereitet auch die Dampfqualität (bei Verwendung von Wasserdampf als Träger). Der Dampf sollte trocken und
sauerstofffrei sein, um den katalytischen Einfluß von Metallen
auf Oxidations-, Hydrolyse- und Dimerisierungsreaktionen der
Triglyceride auszuschließen. Derartige Reaktionen steigen insbesondere in Anwesenheit von Sauerstoff und Metallkatalysatoren in Abhängigkeit von der Einflußtemperatur und der -zeit
stark an. Verweilzeiten des Guts in der Blase bzw. im Dämpfer
sollten bei über 220°C Arbeitstemperatur 20 bis 30 Minuten
nicht überschreiten.

Bei der Destillation mit Trägerdampf ist die Verteilung desselben im zu destillierenden Gut, insbesondere bei stark untergeordnetem Anteil einer oder einige der Gemischkomponenten, beispielsweise der Geschmacks- und Geruchsstoffe  bzw. der freien
Fettsäuren und deren Aufbaustufen in Ölen und Fetten (letztere
als Hauptkomponenten) von entscheidendem Einfluß.

0134835

Da der Trägerdampf bzw. das Trägermittel mit dem Öl oder
Fett nicht oder nur geringfügig mischbar ist, kann ein Austausch, d.h. Übergang der abzutrennenden Begleitstoffe in
das Trägermittel, nur an den Phasengrenzflächen erfolgen,
d.h., je größer diese Grenzflächen sind, umso optimaler ist
der Anteil an unerwünschten Begleitstoffen, die von der Öl- bzw.
Fettphase (die bei der Destillation verbleibende, d.h. nicht abdestillierte Phase), in die verdampfende Phase, im ganz speziellen Falle Wasserdampf, übergehen.

Neben den eingangs bereits geschilderten Verhältnissen der
Dampfmengenabhängigkeit vom Siedeverhalten der Gemischkomponenten, neben der Verweilzeit, dem Arbeitsdruck, der Arbeitstemperatur, Sauerstoffausschluß usw. spielt daher die Verteilung des Trägermittels im zu behandelnden Gut eine entscheidende Rolle.

Da bekanntlich die Siedetemperatur eines Gemischs ineinander
unlöslicher Stoffe niedriger liegt als die Siedetemperatur der
Einzelbestandteile des Gemischs, kann mit Hilfe der Trägerdampfdestillation -insbesondere mit Wasser bzw. Wasserdampf als Trä-
ger- bei der Desodorierung von rohen Ölen und Fetten eine untere Siedetemperatur erreicht werden, bei der die Zersetzung der
Glyceride erheblich herabgesetzt wird, gleichzeitig aber die
unerwünschten Begleitstoffe einschließlich der freien Fettsäuren, besonders aber die Geschmacks- und Geruchsstoffe, in hohem
Maße abdestilliert bzw. abgetrennt werden.

Hierzu muß der Trägerdampf in möglichst feinst verteiltem Zustand in das zu behandelnde Gut eingeführt werden, und es
müßen die abzudestillierenden Komponenten und der Träger feinst
verteilt an die Verdampfungsoberfläche gelangen, damit sich aus
den Partialdrucken ein Gleichgewichtszustand ausbilden kann, der
dem tiefsten noch eben erreichbaren Gesamtdruck in der Destillationsblase entspricht.

Abweichungen von diesem Gleichgewichtszustand und damit verbundene Störungen ergeben sich dann, wenn der eingeleitete Trägerdampf in großen Blasen durch das zu behandelnde Gemisch hindurchschlagen kann oder wenn nicht alle Komponenten im optimalen Sinne die Verdampfungsoberfläche berühren.

Für die Einführung des Trägermittels in Dampfform wurden bereits die unterschiedlichsten technologischen Wege beschritten, wobei stets davon ausgegangen wird, den Trägerdampf im untersten, d.h. tiefsten Bereich (Sumpf) der Destillationsblase aufzugeben, damit beim Aufsteigen ein möglichst langer Weg durchlaufen wird.

Technisch wird hierzu von gelochten Verteilerkränzen, Verteilerböden, Einspritzdüsen oder auch ganz einfach gelochten Rohrschlangen Gebrauch gemacht.

Während die theoretischen Vorraussetzungen der Trägerdampfdestillation -auch bei Ölen und Fetten- im allgemeinen gelöst sind und die Druck- und Temperaturbedingungen, die Verweilzeiten sowie die Trägerdampfmenge aus den physikalischen Kenndaten des zu behandelnden Gemischs herleitbar sind, fordert die optimale Verteilung des Trägerdampfes im Destillationsgut auch heute noch immer Verbesserungen, die im Rahmen vorliegender Erfindung angestrebt und erzielt werden.

Die bekannten Verfahren, ob diskontinuierlich mit einfachen Blasendämpfern, halbkontinuierlich in Anlehnung an die mehretagigen Konstruktionen nach GIRDLER (Typ Votator) und LURGI, oder vollkontinuierlich mit Kreuzstrom-Dämpfer nach KRUPP-KONTI, arbeiten alle nach dem Prinzip der direkten Einleitung von Hochtemperaturdampf (bei Wasserdampf als Trägermittel) in das zu destillierende Gemisch, wobei die Dampfverteilung mit Hilfe der bereits genannten Lochungen, Düsen usw. stets im Bereich der tiefsten Stelle der Blase oder der jeweiligen Kolonnenstufe erfolgt, um ein hohes Maß an Kontaktfläche Dampf/Destillationsgut zu erzielen.

Die Erfahrung lehrt aber, daß selbst durch ein sprudelndes Dampfbett, wie es sich von unten nach oben durch das Destillationsgut fortsetzt, kein optimaler Kontakt hergestellt werden kann, weil die Durchmischung des Trägerdampfes mit dem Destillationsgut weitgehend und somit nicht im Gesamtsystem erfolgt.

Dazu kommt, daß durch die unterschiedlichen Aggregatzustände von -vorwiegend- flüssigem Destillationsgut und -vorwiegenddampfförmigem Trägermittel bei fehlender Löslichkeit ineinander, ein Phasenübergang ausschließlich an der Oberfläche einzelner Flüssigkeitstropfen bzw. Flüssigkeitsbereiche und Dampfblasen erfolgt, ohne daß die inneren Bereiche derartiger Flüßigkeitstropfen in den Austausch einbezogen werden.

Einen von der bisher üblichen Verfahrensweise der Destillation mit Trägermittel abweichenden, völlig neuen Weg beschreitet eine Entwicklung, die das vorstehend abgehandelte Phänomen des begrenzten Phasenaustauschs weitgehend eliminiert und offensichtlich einen nahezu optimalen Austausch zwischen der flüssigen Öl- und/oder Fettphase als Destillationsrückstand und der dampfförmigen Trägermittelphase als Destillat erreicht.

Dieses in der DE-A-2 433 733 beschriebene Verfahren, das auch im industriellen Bereich schnell Eingang gefunden hat, arbeitet zunächst mit flüssigem Trägermittel, z.B. flüssigem Wasser, das als solches in das ebenfalls flüssige Destillationsgut eingeführt wird, wobei die Druck- und Temperaturverhältnisse beider Komponenten so gestaltet sind, daß der Siedepunkt des Wassers überschritten wird. Das unter erhöhtem Druck und erhöhter Temperatur vorliegende innige Gemisch aus Öl bzw. Fett und Wasser, also aus Destillationsgut und Trägermittel, wird anschließend zwecks spontaner Entspannung bei gleichzeitiger Abdestillation des nunmehr dampfförmigen Trägermittels (Wasserdampf) auf verminderten Druck gebracht. Mit dem verdampften Trägermittel werden gleichzeitig auch die unerwünschten Begleitstoffe wie freie Fettsäuren, Geschmacks- und Geruchsstoffe usw. vom weiterhin flüssigen Rückstand, dem nunmehr reinen Öl oder Fett, abgetrennt.

Im speziellen Falle der Desodorierung von pflanzlichen Ölen und Fetten, beispielsweise Sojaöl, das einem vorausgegangenen

0134835

Raffinationsprozess unterworfen wurde, liegen die Drucke und
Temperaturen der Gemischkomponenten in der Misch- bzw. Kontaktzone (Öl bzw. Fett und Wasser) bei etwa 49 Atm und etwa
220°C. Die Destillation bzw. spontane Verdampfung, bei der
also dasWasser in Dampfform übergeht, erfolgt durch Druckreduzierung auf 1 - 30 mbar.

Das Verfahren gemäß DE-A-2 433 733 hat den großen Vorteil, daß
das zu behandelnde Gut (Destillationsgut), im speziellen Falle
das rohe Öl oder Fett, nur sehr kurze Zeit, vielfach nur Bruchteile von Minuten oder Sekunden, der hohen Destillationstemperatur ausgesetzt ist, ganz im Gegenteil zu den weiter vorstehend
abgehandelten konservativen Verfahren, die Verweilzeiten von
20 oder 30 oder noch mehr Minuten erforderlich machen.

Hierdurch bedingt, wird beim Verfahren nach DE-A-2 433 733 die
Neubildung von Begleitstoffen etwa durch Oxidation, Hydrolyse,
Verseifung oder Spaltung im höchsten Maße unterbunden, sodaß
in kürzerer Zeit ein reineres Öl bzw. Fett erhalten wird.

Die Einsparung an Destillationszeit bietet auch die Möglichkeit
der Verkleinerung des Apparateumfangs oder -umgekehrt- es können
in einer bestehenden Anlage bestimmter Kapazität zeitlich mehr
Ansätze gefahren werden, selbst bei öfterem Wechsel der Qualität bzw. Herkunft des Destillationsguts.

Eine Weiterentwicklung des aus DE-A-2 433 733 bekannten Verfahrens beschreibt die DE-A-2 526 944, gemäß der sowohl das Destillationsgut, beispielsweise ein pflanzliches Roh-Öl oder -Fett,
als auch das Trägermedium, im speziellen Falle Wasser, ebenfalls
in flüssiger Phase bei erhöhtem Druck und erhöhter Temperatur
miteinander vermischt werden und das Gemisch nach kurzer Verweilzeit spontan entspannt wird, sodaß eine Trennung in flüssige Phase -reines Öl oder Fett- und dampfförmige Phase aus Wasserdampf und von diesem mitgeschleppten Verunreinigungen aus
dem rohen Öl oder Fett.

Die Entspannung erfolgt beim Verfahren der DE-A-2 433 733 aus
der bei Drucken bis 50 Atm und Temperaturen von etwa 220°C

**0134835**

betriebenen Mischkammer (Kontaktzone) heraus über ein Entspannungsventil spontan, d.h. bei gleichzeitiger Absenkung des
Drucks auf max. 30 mbar in ein Trenngefäß, aus dem der Wasserdampf mit den Öl-Begleitstoffen einschließlich freier Fettsäuren, Benzin usw., durch einen Thermokompressor bzw. Ejektor
abgezogen und einem barometrischen Kondensator zugeführt wird,
während das nunmehr relativ reine Öl bzw. Fett am Boden des
Trenngefäß in flüssiger Phase abgezogen werden.

Das Verfahren der DE-A-2 526 944 beschreibt im Prinzip den gleichen Weg. Es wird jedoch zwischen Mischkammer (Kontaktzone) und
Trenngefäß ein zusätzlicher eigentlicher Entspanner wirksam,
der das aus dem Kontaktgefäß austretende Gemisch zunächst auf
einen Entspannungsdruck bringt, der erheblich unter dem im
Trenngefäß herrschenden Druck liegt und beispielsweise etwa 1 bis
5 Torr beträgt. Dies bedeutet, daß die eigentliche Destillation
aus dem Entspanner heraus erfolgt, und daß das Gemisch aus Roh-Öl
und Wasser, das in der Mischkammer unter einem Druck von bis
50 Atm /240-242°C (Temperatur) vorlag, in gemischt flüssig/dampfförmiger Phase in das Trenngefäß gelangt. Selbstverständlich
kühlt sich das Gemisch bei der spontanen Entspannung ab (Verdamfungswärme des Wassers), doch wird eine Wasserkondensation unterbunden, da die Abkühlung höchstens 15 - 30°C beträgt.

Die Entwicklung des Verfahrens nach DE-A-2 526 944 war eher
energiewirtschaftlicher Natur, da die Reinheit des Öls bzw.
Fetts durch die Einschaltung eines Entspanners zwischen Mischgefäß und Trenngefäß nur wenig verbessert werden konnte. Vielmehr hatte sich gezeigt, daß die für das Verfahren nach DE-A-
2 433 733 zur Entspannungsdruckeinstellung vorgeschlagenen
Thermokompressoren, die im allgemeinen dreistufig mit je zwei
Düsen pro Stufe arbeiten, erhebliche Mengen Dampf verbrauchen,
die die Wirtschaftlichkeit des bekannten Verfahrens trotz erheblich verbesserter Reinheit des Öls bzw. Fetts stark belasten.

Durch die Zwischenschaltung des Entspanners kann auf die im allgemeinen üblichen und auch im Verfahren nach DE-A-2 433 733 vorgeschlagenen, hohen Dampf fordernden, Thermokompressoren ver-

0134835

zichtet werden. Beim Arbeiten nach DE-A-2 526 944 ist die
Dampfeinsparung erheblich, der Reinheitsgrad des Destillationsgut erreicht ebenfalls einen bis dahin nicht gekannten, höchstens aus dem Verfahren nach DE-A-2 433 733 herleitbaren Grad.

So konnte -ob mit oder ohne zwischengeschaltetem Entspannerder Gehalt an freien Fettsäuren von ca. 3 - 5 Gew.-% auf unter 0,4 Gew.-% gesenkt werden. Insgesamt gesehen gelingt es
mit vorstehend abgeleiteten Verfahren, den Gehalt an unerwünschten Begleitstoffen in pflanzlichen Fetten und Ölen von
6 Gew.-% und teilweise darüber auf weniger als 0,45 Gew.-%
zu drücken, wobei gleichzeitig die nur in Spuren vorliegenden Geruchs- und Geschmacksstoffe ebenfalls in hohem Maße
ausgeschaltet werden.

Es hat sich aber gezeigt, daß die vorstehend dargelegten hohen
Reinheitsgrade noch weiter gesteigert werden können, was insbesondere bei der direkten Weiterverarbeitung der mit Trägermedium destillierten rohen, ggf. raffinierten Öle und Fette
auf Nahrungsmittel von größter Bedeutung ist.

So ist es erstrebenswert und für den Nahrungsmittelsektor unerläßlich, daß die freien Fettsäuren optimal eliminiert werden, daß weitere Aufbaugruppen für Kohlenwasserstoffe und
Säuren, Aldehyde, Hetone usw. absolut ausgeschaltet werden,
und daß Produkte gewonnen werden, die absolut geruchs- und
geschmacksneutral sind.

Man wäre zunächst versucht, dies durch Verlängerung der
Kontaktzeit (Mischzeit) oder durch ein höheres Verhältnis
Trägermedium (Wasser bzw. Wasserdampf) zum rohen Öl bei ggf.
noch höheren Temperaturen und Drucken zu erreichen.

Es hat sich jedoch gezeigt, daß eine längere Kontaktzeit
genau das Gegenteil bewirkt, und daß ein höheres Wasser/
Öl-Verhältnis schon aus wirtschaftlichen Gründen, abgesehen
von einer kaum verbesserten Produktqualität, nicht der geeignete Weg ist.

Es wurde nun in Weiterentwicklung der vorstehend abgeleiteten bekannten Verfahren überraschender Weise gefunden, daß der Gehalt an freien Fettsäuren im Destillationsprodukt (Öl oder Fett) auf unter 0,04 Gew.-% und die Geruchs- und Geschmacksstoffe praktisch auf nicht mehr feststellbar gebracht werden können, wenn man nach den Maßnahmen der Erfindung arbeitet.

Das neue Verfahren zur Abtrennung unerwünschter Begleitstoffe wie Geschmacks- und Geruchsstoffe, freie Fettsäuren und andere aus insbesondere pflanzlichen und tierischen Ölen und Fetten, wobei diese -ggf. im Anschluß an die sonst übliche Raffination- einer Trägerdampfdestillation unterworfen werden, das Trägermedium, vorwiegend Wasser bzw. Wasserdampf, und das zu reinigende Öl oder Fett unter einem Druck, bei dem beide Komponenten in flüssiger Form vorliegen und einer Temperatur zwischen etwa 170 und 250°C in einem Kontaktgefäß innig vermischt, anschließend spontan in ein Trenngefäß entspannt werden, wo nach Druckabsenkung die Trennung des nach der Entspannung flüssig vorliegenden Öls bzw. Fetts vom gas- bzw. dampfförmigen Gemisch aus Trägermedium und mit diesem abgetrennte Begleitstoffe erfolgt, ist dadurch gekennzeichnet, daß es mindestens zweistufig durchgeführt wird, wobei in der ersten Stufe die mit einem Mischdruck von etwa 10 bis 52 Atm und der zugehörigen Mischtemperatur -zwecks Aufrechterhaltung des flüssigen Aggregatzustands beider Komponenten im Kontaktgefäß ist die Mischtemperatur eine Funktion des Drucks- nach einer Misch-Verweilzeit von weniger als etwa 10 Min. aus dem Kontaktgefäß heraus auf einen Druck von 1 bis 30 mbar spontan entspannte Mischung in flüssige und dampfförmige Phase getrennt, die das gereinigte Öl bzw. Fett enthaltende flüssige Phase erneut auf eine Kontakttemperatur von 200 bis 250°C aufgeheizt und bei einem Druck von 45 bis 50 Atm. mit dem gleiche Temperatur und annähernd gleichen Druck aufweisenden Trägermedium flüssig und erneut kontaktiert, anschließend auf einen Trenndruck von

0134835

5 bis 25 mbar entspannt und in flüssiger Phase vom dampfförmigen Gemisch aus Träger und Verunreinigungen abgetrennt wird.

Besonders vorteilhaft ist das Verfahren, wenn zwischen Kontaktzone und Trennzone eine Entspannungszone geschaltet ist, in der die spontane Entspannung in mindestens einer der beiden Stufen auf einen Druck erfolgt, der etwa 5 bis 10 % des Trenndrucks entspricht und beispielsweise zwischen 1 und 5 mbar liegt.

Nachdem sich gezeigt hatte, daß weder durch Verlängerung der Kontaktzeit noch Änderung der Temperatur oder des Mengenverhältnisses Träger/Öl bzw. Fett eine Steigerung der Reinheitsgrades des behandelten Guts zu erzielen war, muß es als überraschend gewertet werden, daß durch Wiederholung einer einzigen Verfahrensstufe, also durch die Zweistufigkeit (oder ggf. auch weiterer, nahezu identischer Stufen) der vorstehend dargelegte extrem hohe Reinheitsgrad erzielt werden kann. Dabei steht der erhöhte Dampfverbrauch beim Zweistufenverfahren in keinem Verhältnis zum erreichten Reinheitsgrad, zumal in der zweiten (oder weiterer nachfolgenden ) Stufen das Verhältnis Träger zu Öl im Ansatz, d.h. im Kontaktgefäß, erheblich gesenkt werden kann.

Für die Reinheit des Produkts spielt es keine wesentliche Rolle, ob die Entspannung in erster und/oder zweiter Stufe vom Kontaktgefäß direkt und spontan in das Trenngefäß erfolgt, oder ob die spontane Destillation über eine Entspannungszone geschieht.

Im letzteren Falle ergibt sich vielfach nur eine wirtschaftlichere Dampfausbeute zur Erzeugung des Vakuums, wobei natürlich auch andere Möglichkeiten der Erzeugung von Unterdruck angewendet werden können.

In den meisten Fällen -dies ist eine Funktion der Anlagenkapazität- kann das flüssige Destillationsgut aus dem Trenngefäß direkt der zweiten bzw. nachfolgenden Stufe zugeführt werden. Ist dies nicht möglich, so wird das flüssige Destillationsgut zweckmäßigerweise zunächst auf unter 100°C abgekühlt und zwar im Bereich des gegebenen Trenndrucks, bis die nachfolgende

0134835

Stufe eingeleitet werden kann.

Um eine erneute Vermischung des flüssigen Destillationsgutes mit dem dampfförmigen Trägermedium bei der Trennung zu verhindern, was insbesondere bei nachlassendem Trenn-Vakuum möglich ist, kann dem Trenngefäß zweckmäßigerweise zusätzliches Trägermedium in Dampfform zugegeben werden, das als sogenannter Sperrdampf die Rückvermischung verhindert.

Auch kann bei Verwendung einer Entspannungszone diese mit zusätzlichem, dampfförmigen Trägermedium beschickt werden, wodurch der Entspannungsdruck weiter gesenkt werden kann.

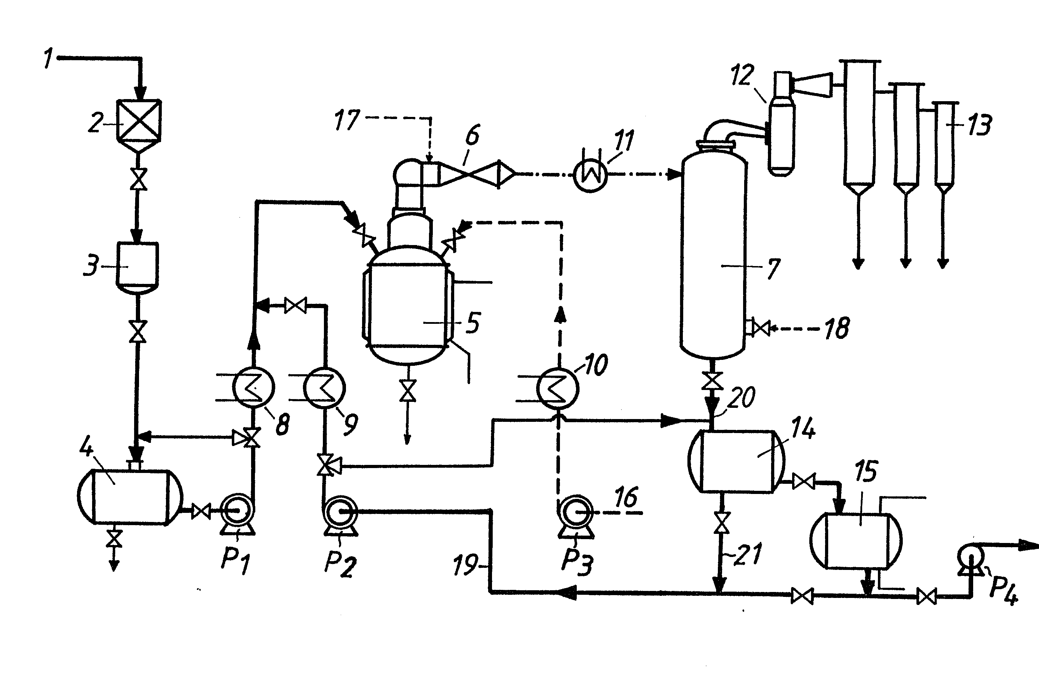

Das Verfahren der Erfindung wird nachfolgend anhand der Figur, die ein allgemein gültiges Fließschema darstellt, erläutert:

Das rohe, ggf. nach bekannten Verfahren behandelte Öl, beispielsweise Sojaöl, gelangt vom Lager (1) über eine Waage oder eine sonstige geeignete Chargenmeßanlage (2) und ggf. ein Filter (3) in die Vorlage (4). Von dieser wird das Öl durch die Pumpe ($P_1$) abgezogen und auf den Betriebsdruck von etwa 35 bis 37 Atm. gebracht. Über einen Durchlauferhitzer (8) erfolgt die Aufheizung auf eine Arbeitstemperatur von 200 bis 204°C

Gleichzeitig wird möglichst sauerstofffreies Wasser aus Leitung (16) von der Pumpe ($P_3$) über den Durchlauferhitzer (9) auf gleiche Druck/Temperatur-Verhältnisse eingestellt. Das Mengenverhältnis Öl/Wasser ist ca. 20 Kp Wasser (flüssig) je 1000 kg Öl.

Beide Komponentenströme werden im Kontaktgefäß (5), das ggf. beheizt sein kann, vermischt und nach ca. 2 - 4 Min. Verweilzeit in der Entspannungszone (6) auf einen Druck von 1,5 mbar spontan entspannt. Dabei werden über (17) ca. 10 Kp Hochdruckdampf zusätzlich eingespeist.

Sofern bei der Entspannung in (6) ein zu hoher Temperaturabfall verzeichnet wird, kann über den Austauscher (11) die Trenntemperatur wieder eingestellt werden.

0134835

Das in (6) entspannte Gemisch gelangt in das Trenngefäß (7)
wo sich die flüssige Phase, d.h. das gereinigte Öl am Boden
sammelt, während die Dampfphase, im vorliegenden Falle Wasserdampf, mit den bei den gegebenen Temperatur-und Druckbedingungen
flüssigen Öl-Begleitstoffen, über einen Thermokompressor (12)
und einen Dampfstrahlsauger (13) abgezogen wird.

Das aus dem Trenngefäß (7) abgezogene Öl wird von der Vorlage
(14) über Leitung (20)aufgenommen und ggf. direkt über L eitung
(21) und (19) von der Pumpe (P$_2$) und Durchlauferhitzer (9) auf
die Betriebsbedingungen der zweiten Stufe gebracht.

Dies ist insbesondere dann von Vorteil, wenn für jede Stufe ein
eigenes Kontaktgefäß (5) und ein eigenes Trenngefäß (7) zur verfügung steht, wenn also die Anlage gemäß der Anzahl der Stufen
doppelt oder ggf. dreifach ausgerüstet ist.

Sofern die zweite Behandlungsstufe der ersten nicht direkt folgen kann, was z.B. bei nur einem Kontaktgefäß (5) der Fall sein
kann, wird das am Boden des Trenngefäßes abgezogene Öl über Leitung (20) und Vorlage (14) -oder auch direkt über einen by-passder gekühlten Vorlage (15) zugeführt und hier beim gegebenen
Trenndruck zunächst auf unter 100°C abgekühlt und gelagert.
Sobald das Kontaktgefäß (5) bzw. die übrigen Anlageteile verfügbar sind, wird das Öl aus (15) insgesamt über Leitung (19) abgezogen und über Pumpe (P$_2$) bzw. Erhitzer (9) der Kontaktierung
mit Wasser aus Leitung (16) im Kontaktgefäß (5) zugeführt.

Obwohl die Arbeitsbedingungen in der zweiten -und evtl. weiterer Stufen-prinzipiell denen der ersten Stufe entsprechen können,
hat sich gezeigt, daß in der zweiten Stufe die Bedingungen von
Druck und Temperatur etwas begrenzter anzuwenden sind, wenn eine
optimale Fremdstoffabtrennung vom Destillationsgut erreicht werden soll.

In der vorstehend abgeleiteten ersten Stufe des Verfahrens enthält das gereinigte Öl noch ca. 0,04 bis 0,05 % freie Fettsäuren                                    und untergeordnete Anteile an

Geschmacks- und Geruchsstoffen, was an der Geruchsvervesserung
deutlich zu erkennen ist.

Für die zweite Verfahrensstufe wird das aus der Vorlage (14)
über Leitung (21) bzw. aus der Kühler-Vorlage (15) über Leitung (19) entnommene Öl durch Pumpe ($P_2$) und Erhitzer (9) auf
einen Kontaktdruck von 49 Atm und eine Temperatur von 242°C
eingestellt. Frischwasser aus (16) wird diesen Arbeitsbedingungen durch Pumpe ($P_3$) und Erhitzer (10) angepasst.

Bei einer Kontaktzeit von nur zwei Minuten -berechnet vom Ende
der Komponenteneinfüllung bis zum Entlehren wird direkt in das
Trenngefäß (7) entspannt, wobei der Erhitzer (11) nicht eingeschaltet ist. Im Trenngefäß (7) herrscht nach der spontanen Entspannung ein Druck von 12 - 15 mbar bei einer Temperatur von
etwa 220°C.

Es versteht sich, daß die zweite Stufe auch unter den Bedingungen der ersten Stufe gefahren werden kann. Umgekehrt kann auch
in der ersten Stufe ohne Entspannungszone oder in beiden Stufen
ohne Entspannungszone oder in beiden Stufen mit Entspannungszone
usw. gearbeitet werden.

In diesem Zusammenhang sei darauf hingewiesen, daß eine besonders geeignete Entspannungseinrichtung (6) in der DE-A-2 526
944 beschrieben wird. Sie besteht aus zwei hintereinandergeschalteten Düsen, bei denen die Durchströmung durch die dem Kontaktgefäß folgende Düse einstellbar ausgebildet ist. Diese Einstellung erfolgt mit Hilfe einer in axialer Richtung verschiebbaren Hohlnadel, durch die zusätzlicher Dampf eingeführt werden
kann. Zweckmäßigerweise ist hinter der ersten Düse ein erster
Entspannungsraum vorgesehen, der mit zusätzlichem Trägerdampf
beaufschlagt werden kann.

Das im Anschluß an die zweite Stufe aus dem Trenngefäß (7) abgezogene reine Öl, im speziellen Falle Sojaöl, gelangt von der
Vorlage (14) oder über die Kühler-Vorlage (15) zur Pumpe ($P_4$)
und wird durch diese der Weiterverarbeitung auf Nahrungsmittel
zugeführt. Eine zusätzliche Reinigung ist nicht mehr erforderlich, abgesehen von einer evtl. Polierfiltration.

Das Öl enthält nachweislich Analyse noch 0,02 Gew.-% freie Fettsäuren und praktisch keine Geruchsstoffe.    Der Geschmack bzw.
Geruch ist vollkommen neutral. Diese Werte änderten sich auch
nicht bei längerem Lagern des Öls. Ebenfalls war keine Veränderung der glatten, blanken Ölfarbe feststellbar.

In der Zweiten Stufe kann die Trägerdampfmenge, d.h. das flüssig
über Pumpe (16) und Erhitzer (10) zugeführte Wasser, um ca. 20 -
30 % gegenüber der ersten Stufe gesenkt werden, d.h., es werden
für je 1000 kg Öl aus der ersten Stufe nur noch ca. 14 bis 16
Kp Wasser benötigt.

Es versteht sich, daß im Rahmen des vorstehend abgehandelten Verfahrens in Verbindung mit dem Fließschemata nur die wichtigsten
Verfahrensschritte dargelegt wurden. Es bieten sich im Umfang des
Wissens des Durchschnittfachmanns weitere apparative und verfahrenstechnische Änderungen, ohne daß hierdurch der Rahmen der
Erfindung verlassen wird. Dies betrifft insbesondere die Ausbildung der Entspannungszone (6), die Vakuumanlage (12,13), die Art
der Rohstofferhitzung in den Wärmeaustauschern (8,9,10,11), die
Frage der Einspeisung von Zusatz- und Sperrdampf in die Entspannungszone (6) über (17) oder in das Trenngefäß (7) über (18)
sowie vor allem die Anzahl und Auslegung des Kontaktgefäßes (5)
und des Trenngefäßes (7).
Die Verfahrensparameter wie Druck, Temperatur, Verweilzeit, Vakuum, Menge Trägermedium usw. richten sich selbstverständlich
nach dem zu behandelnden Gut. Sie werden aber vorwiegend im Bereich der vorstehend für Sojaöl abgehandelten Bedingungen zu suchen sein.

Patentansprüche

1. Verfahren zum Abtrennen unerwünschter Begleitstoffe wie Geschmacks- und Geruchsstoffe, freie Fettsäuren u.a. aus insbesondere pflanzlichen und tierischen Ölen und Fetten, wobei diese -ggf. vor oder nach der üblichen Raffination- einer Trägerdampfdestillation unterworfen werden, das Trägermedium, vorwiegend Wasser bzw. Wasserdampf, und das zu reinigende Öl oder Fett unter einem Druck, bei dem beide Komponenten in flüssiger Form vorliegen und einer Temperatur zwischen 170 und 250°C in einem Kontaktgefäß innig vermischt, anschließend spontan in ein Trenngefäß entspannt werden, wo nach Druckabsenkung die Trennung des nach der Entspannung flüssig vorliegenden Öls bzw. Fetts vom gas- bzw. dampfförmigen Gemisch aus Trägermedium und mit diesem abgetrennte Begleitstoffe erfolgt, dadurch gekennzeichnet, daß das Verfahren mindestens zweistufig erfolgt und in der ersten Stufe die mit einem Mischdruck von etwa 10 - 52 Atm und einer Mischtemperatur von 200 bis 250°C nach einer Verweilzeit von weniger als 10 Min. aus dem Kontaktgefäß heraus auf einen Druck von etwa 1 bis 30 mbar spontan entspannte Mischung in flüssige Öl- bzw. Fettphase und dampfförmige Phase getrennt, die flüssige Phase in der zweiten Stufe erneut auf eine Kontakttemperatur von 200 bis 250°C aufgeheizt und bei einem Druck von 45 bis 50 Atm mit dem gleiche Temperatur und annähernd gleichen Druck aufweisenden Trägermedium in flüssiger Phase erneut kontaktiert, anschließend auf den zweiten Trenndruck von 5 bis 25 mbar entspannt und nach Trennung der Phasen das reine Öl bzw. Fett in flüssiger Phase gewonnen wird.

2. Verfahren nach Anspruch 1, dadurch gekennzeichnet, daß in mindestens einer der Verfahrensstufen zwischen Kontaktzone und Trennzone eine Entspannungszone geschaltet ist, in der die Entspannung bei einem Druck erfolgt, der etwa 5 bis 10 % des Trenndrucks entspricht.

3. Verfahren nach Anspruch 2,
dadurch gekennzeichnet, daß der Entspannungsdruck in der
Entspannungszone zwischen etwa 0,1 und 5 mbar, insbesondere 0,2 bis 1 mbar liegt.

4. Verfahren nach Ansprüchen 1 - 3,
dadurch gekennzeichnet, daß das in der Trennzone vom dampfförmigen Trägermedium getrennte flüssige Destillationsgut
nach erneuter Druckbeaufschlagung und Temperatureinstellung sofort der nächsten Destillationsstufe zugeführt wird.

5. Verfahren nach Ansprüchen 1 - 3,
dadurch gekennzeichnet, daß das in der Trennzone vom dampfförmigen Trägermedium getrennte flüssige Destillationsgut
beim Trenndruck zunächst auf unter 100°C abgekühlt und bei
diesen Bedingungen gelagert wird, bevor es der nächsten Destillationsstufe zugeführt wird.

6. Verfahren nach Ansprüchen 2 - 5,
dadurch gekennzeichnet, daß der Entspannungsdruck durch Zusatz weiteren dampfförmigen Trägermediums in die Entspannungszone weiter abgesenkt wird.

**Europäisches Patentamt**

# EUROPÄISCHER RECHERCHENBERICHT

EP 83 10 9360

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A- 650 192 (THAMES RICE MILLING) * Anspruch 1 * | 1 | C 11 B 1/10 C 11 B 3/14 A 23 P 1/00 |
| A | FR-A-2 313 954 (H. SCHUMACHER) * Ansprüche 1-3; Seite 4, Zeilen 6-22 * | 1-3 | |
| A | FR-A-2 141 153 (STORK AMSTERDAM) * Ansprüche 1,2 * | 1 | |
| A | JOURNAL OF THE AMERICAN OIL CHEMISTS' SOCIETY, Band 39, April 1962, Seiten 222-229, G.C. MUSTAKAS et al.: "Flash desolventizing defatted soybean meals washed with aqueous alcohols to yield a high-protein product" * Seite 222, Spalte 1; Seite 223, Spalte 2; Seite 225, Spalte 1 * | 1 | |

RECHERCHIERTE SACHGEBIETE (Int. Cl. ³)

C 11 B
A 23 P

Der vorliegende Recherchenbericht wurde für alle Patentansprüche erstellt.

| Recherchenort DEN HAAG | Abschlußdatum der Recherche 29-05-1984 | Prüfer PEETERS J.C. |
|---|---|---|